# EUROPEAN PATENT APPLICATION

(11) **EP 3 505 380 A1**
(43) Date of publication of application: **03.07.2019**
(21) Application number: 17843300.9
(22) Date of filing: 26.07.2017
(51) Int. Cl.: B60K 7/00

(54) **IN-WHEEL MOTOR DRIVE DEVICE FOR STEERED WHEEL**

(30) Priority: 25.08.2016 JP 2016164292
(71) Applicant: NTN Corporation, Osaka-shi, Osaka 550-0003 (JP)
(72) Inventor: ISHIKAWA, Takanori, Iwata-shi Shizuoka 438-8510 (JP); TAMURA, Shiro, Iwata-shi Shizuoka 438-8510 (JP); TAIKOU, Shinya, Iwata-shi Shizuoka 438-8510 (JP)
(74) Representative: Bockhorni & Brüntjen Partnerschaft Patentanwälte mbB
(86) International application number: PCT/JP2017/026964
(87) International publication number: WO 2018/037814

(57) **Abstract**

A motor unit (121) of an in-wheel motor drive device (110) for a steered wheel has a cylindrical first casing (125) serving as a part of an outer shell of the motor unit which is located on one side in the direction of an axis (M), a second casing (126) serving as a part of the outer shell of the motor unit which is located on the other side in the direction of the axis and having a smaller outside diameter at its end (128) located on the other side in the direction of the axis than at its end located on the one side in the direction of the axis, abutting surfaces (125f, 126f) formed on an end of the first casing which is located on the other side in the direction of the axis and the end of the second casing which is located on the one side in the direction of the axis and abutting on each other, and a stator (124) extending in the direction of the axis and having its one end placed in the first casing and the other end placed in the second casing.

## Description

### Technical Field

The present invention relates to in-wheel motor drive devices that are mounted in internal space regions of wheels to be steered and drive the wheels, and more particularly relates to motor casings.

### Background Art

For example, an in-wheel motor described in Japanese Unexamined Patent Publication No. 2014-76775 (Patent Literature 1) is conventionally known as an in-wheel motor that is mounted in a wheel to drive the wheel. The in-wheel motor described in Patent Literature 1 includes a hub unit bearing disposed on one side in the axial direction, a reduction gear mechanism disposed in the middle in the axial direction, and an electric motor disposed on the other side in the axial direction.

The electric motor has a cylindrical housing, a stator accommodated in the housing, a rotor placed radially inside the stator, and a disc-shaped cover coupled to an end of the housing. The housing has smaller outside and inside diameter dimensions on the one side in the axial direction and larger outside and inside diameter dimensions on the other side in the axial direction. The cover closes the end of the housing which is located on the other side in the axial direction. The outside diameter dimension of the cover is therefore the same as that of the end of the housing which is located on the other side in the axial direction.

### Citation List

### Patent Literatures

Patent Literature 1: Japanese Unexamined Patent Publication No. 2014-76775

### Summary of Invention

### Technical Problem

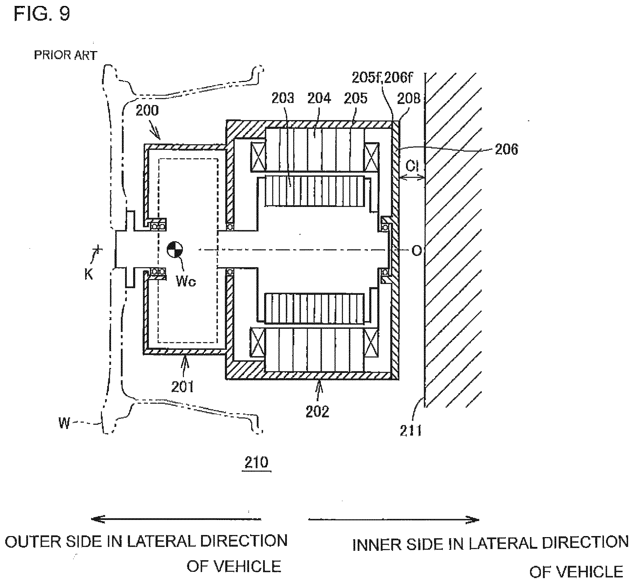

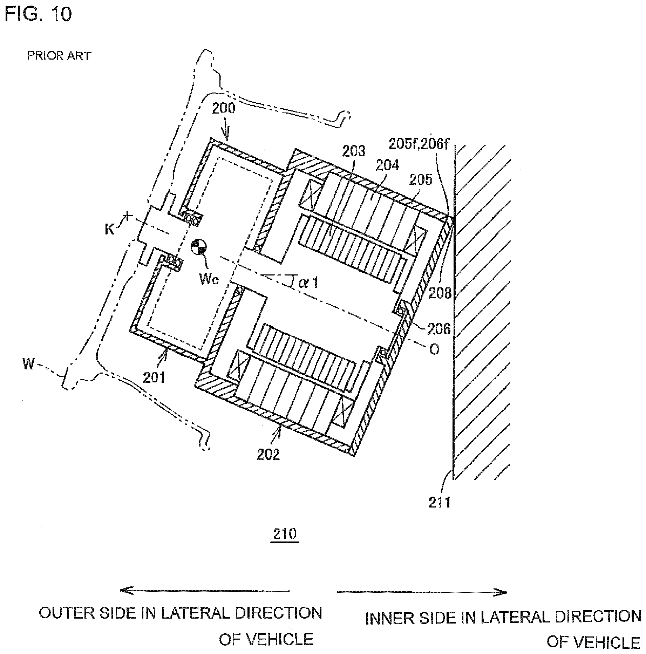

The positional relationship between a vehicle body of an electrically powered vehicle and an in-wheel motor will be described below. FIGS. 9 and 10 are schematic sections of a conventional in-wheel motor 200 as viewed in the vertical direction. An outline of the in-wheel motor 200 will be provided. The in-wheel motor 200 includes a hub unit bearing 201 disposed on the outer side in the lateral direction of a vehicle and an electric motor 202 disposed on the inner side in the lateral direction of the vehicle. The electric motor 202 has a larger diameter than the hub unit bearing 201 and includes a rotor 203, a stator 204, a cylindrical housing 205, and a disc-shaped cover 206. An end of the housing 205 which is located on the inner side in the lateral direction of the vehicle is closed by the cover 206. An abutting surface 205f of the housing 205 and an abutting surface 206f of the cover 206 are located at an end of the in-wheel motor 200 which is located on the inner side in the lateral direction of the vehicle. The abutting surfaces 205f, 206f are also located on the inner side in the lateral direction of the vehicle with respect to the rotor 203 and the stator 204.

The cover 206 has the largest outside diameter dimension in the in-wheel motor 200. The reason why the outside diameter of an outer edge 208 of the cover 206 is larger than that of the stator 204 is considered to be as follows. An opening at the end of the housing 205 which is located on the inner side in the lateral direction of the vehicle is made slightly larger than or about the same size as the stator 204 so that, when assembling the in-wheel motor 200, the stator 204 is inserted into the housing 205 through the opening at the end of the housing 205 which is located on the inner side in the lateral direction of the vehicle and is attached and fixed to an inner peripheral surface of the housing 205.

The in-wheel motor 200 together with a wheel shown by a long dashed double-dotted line is accommodated in a wheel well 210 of the vehicle body. The wheel well 210 is formed on both sides of the vehicle body in the lateral direction of the vehicle. When the electrically powered vehicle moves straight, the cover 206 of the in-wheel motor 200 faces a wall material 211 of the wheel well 210 with predetermined clearance Cl therebetween, as shown in FIG. 9.

There are cases where such a conventional in-wheel motor is mounted in a steered wheel that is steered in the right-left direction of an electrically powered vehicle. A tire, not shown, is fitted on a road wheel W of the steered wheel. For driving stability, the closer a steering axis K is to a wheel center Wc of the steered wheel, the better. However, the inventors found that the following problems occur in the case where the steering axis K is located at a position on the outer side in the lateral direction of the vehicle with respect to the wheel center Wc of the steered wheel and close to the wheel center Wc and the in-wheel motor 200 is turned about the steering axis K as shown in FIG. 9.

That is, referring to FIG. 10, when the in-wheel motor 200 is steered, the larger a steering angle is, the closer the outer edge 208 of the cover 20 gets to the wall material 211 of the wheel well 210. The steering angle therefore cannot be increased in order to avoid interference between the in-wheel motor 200 and the wall material 211.

In order to reduce manufacturing cost of electrically powered vehicles, it is desired to apply common vehicle bodies equipped with an internal combustion engine to the electrically powered vehicles. The wheel well 210 of a common vehicle body is not large enough to accommodate the in-wheel motor 200 and also absorb displacement of the in-wheel motor 200. The wall material 211 of the common vehicle body is therefore located close to the in-wheel motor 200, resulting in the abovementioned problems of the interference and the steering angle.

In view of the above circumstances, it is an object of the present invention to provide an in-wheel motor drive device for a steered wheel which neither sacrifices the steering angle nor requires an increase in size of a wheel well.

### Solution to Problem

In order to achieve the above object, an in-wheel motor drive device for a steered wheel according to the present invention includes: a wheel hub bearing unit that rotatably supports a wheel hub coupled to the steered wheel; and a motor unit that drives the wheel hub. The motor unit has a tubular first casing serving as a part of an outer shell of the motor unit which is located on one side in an axial direction, a tubular second casing serving as a part of the outer shell of the motor unit which is located on the other side in the axial direction and having a smaller outside diameter at its end located on the other side in the axial direction than at its end located on the one side in the axial direction, abutting surfaces formed on an end of the first casing which is located on the other side in the axial direction and the end of the second casing which is located on the one side in the axial direction and abutting on each other, and a stator extending in the axial direction and having its one end placed in the first casing and the other end placed in the second casing.

According to the present invention, the one end of the stator extending in the axial direction is accommodated in the first casing, the other end of the stator is accommodated in the second casing, and the abutting surfaces are disposed in a middle region of the stator in the axial direction. When assembling the motor unit, the stator can therefore be inserted into the first casing through an opening of the first casing and the opening of the first casing can be covered by the second casing. Moreover, the outside diameter of the end of the second casing which is located on the other side in the axial direction can be made smaller than that of the end of the second casing which is located on the one side in the axial direction. This can reduce interference between the end of the second casing which is located on the other side in the axial direction and a wall material of a wheel well even when the in-wheel motor drive device is steered, and can increase a maximum steering angle of the in-wheel motor drive device.

The first and second casings abut on each other to form a motor casing. It is therefore preferable that the first and second casings have the same wall thickness and be made of the same material. The stator is fixed to the first casing, whereby the first casing supports the stator. The stator may be supported only by the first casing or may be supported by the first and second casings. In one embodiment, the second casing rotatably supports a rotor of the motor unit. Specifically, a motor rotary shaft is placed in the center of the rotor, the second casing supports via a rolling bearing an end of the motor rotary shaft which is located on the other side in the axial direction, and the first casing supports via a rolling bearing an end of the motor rotary shaft which is located on the one side in the axial direction. Alternatively, a cylindrical portion may be formed in a central portion of the second casing substantially perpendicularly to the bottom of the second casing, the motor rotary shaft may be passed through the cylindrical portion, and a plurality of rolling bearings may be disposed in annular clearance between the cylindrical portion and the motor rotary shaft. The plurality of rolling bearings are arranged at intervals in the axial direction, whereby the rotor (motor rotary shaft) is supported only by the second casing. In another embodiment, the rotor (motor rotary shaft) is supported only by the first casing.

In one embodiment of the present invention, the stator includes a stator core and a stator coil wound around the stator core, and an end of the stator core which is located on the one side in the axial direction is placed in the first casing, and an end of the stator core which is located on the other side in the axial direction is placed in the second casing. Alternatively, in another embodiment of the present invention, both ends of the stator core in the axial direction and an end of the stator coil which is located on the one side in the axial direction are placed in the first casing, and an end of the stator coil which is located on the other side in the axial direction is placed in the second casing.

In a preferred embodiment of the present invention, an outer peripheral surface of the stator is fitted in an inner peripheral surface of the first casing. According to such an embodiment, the stator can be positioned coaxially with the motor unit. Specifically, the inner peripheral surface of the first casing has a constant radius along its length in the axial direction and is fitted on an outer peripheral surface of a region of the stator core which is located on the one side in the axial direction. More preferably, an inner peripheral surface of a region of the second casing which is located on the one side in the axial direction has a constant radius along its length in the axial direction and is fitted on an outer peripheral surface of a region of the stator core which is located on the other side in the axial direction. In another embodiment, an inner peripheral surface of the second casing may be separated from an outer peripheral surface of the stator core.

In a more preferred embodiment of the present invention, a stepped portion that faces toward the other side in the axial direction and contacts the stator is formed inside the first casing. According to such an embodiment, the stator can be positioned at a predetermined axial position. It is preferable that the stepped portion be formed integrally with the inner periphery of the first casing. Alternatively, the stepped portion is a separate member that is attached to the inside of the first casing or the motor unit.

In one embodiment of the present invention, an end of the first casing which is located on the one side in the axial direction rotatably supports the rotor unit via a bearing. Specifically, it is preferable that the center of the rotor be coupled to the motor rotary shaft and the motor rotary shaft be supported by the first and second casings via rolling bearings. In another embodiment, the rotor is rotatably supported only by the second casing. In a reference example, the rotor is rotatably supported only by the first casing.

In one embodiment of the present invention, the wheel hub is disposed so as to extend parallel to an axis of the rotor, and the in-wheel motor drive device further includes: a parallel-shaft gear reducer mechanism that has an input gear coupled to the rotor and an output gear coupled to the wheel hub and that reduces a speed of input rotation from the rotor to output the resultant rotation to the wheel hub. Such an embodiment is advantageous in that interference between the motor unit and the wall material of the wheel well can be avoided in the case where the motor unit is offset in a direction perpendicular to an axis of the wheel hub bearing and the motor unit thus gets closer to the wall material when the in-wheel motor drive device is steered. In another embodiment, the wheel hub and the rotor may be coaxially arranged.

### Advantageous Effects of Invention

As described above, according to the present invention, the maximum steering angle of the in-wheel motor drive device can be increased as compared to conventional examples, and the steering angle of the in-wheel motor drive device and the steered wheel is not sacrificed even when the wheel well accommodating the in-wheel motor drive device and the steered wheel is formed with the same dimensions as a wheel well of a vehicle equipped with an engine. That is, a sufficient maximum steering angle can be provided without making the wheel well accommodating the in-wheel motor drive device and the steered wheel wider than a wheel well of a vehicle equipped with an engine.

### Brief Description of Drawings

FIG. 1 is a schematic longitudinal section of an in-wheel motor drive device of the present invention.
FIG. 2 is a schematic longitudinal section of the in-wheel motor drive device of the present invention.
FIG. 3 is a schematic longitudinal section of the in-wheel motor drive device of the present invention which is being assembled.
FIG. 4 is a schematic longitudinal section of an in-wheel motor drive device according to a modification of the present invention.
FIG. 5 is a schematic longitudinal section of an in-wheel motor drive device according to another modification of the present invention.
FIG. 6 is a view showing an in-wheel motor drive device according to a specific embodiment of the present invention as viewed from the outer side in the lateral direction of a vehicle.
FIG. 7 is a transverse section of the in-wheel motor drive device of the embodiment.
FIG. 8 is a developed section of the in-wheel motor drive device of the embodiment.
FIG. 9 is a schematic longitudinal section of a conventional in-wheel motor drive device.
FIG. 10 is a schematic longitudinal section of the conventional in-wheel motor drive device.

### Description of Embodiments

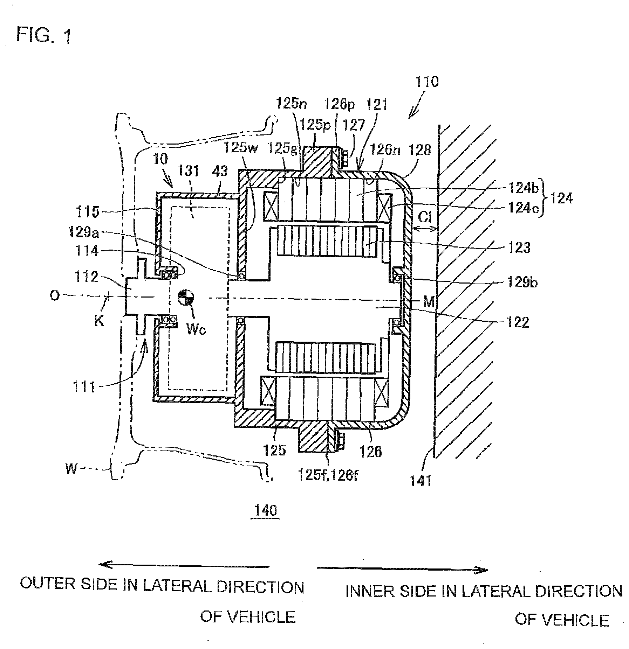

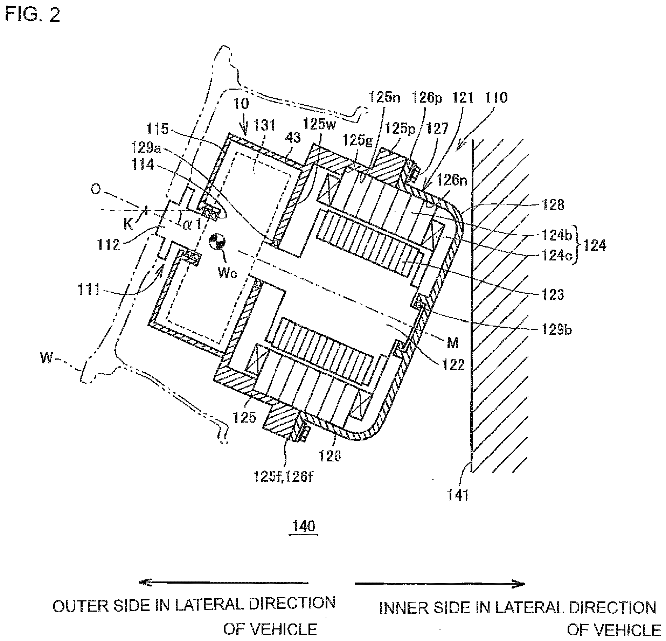

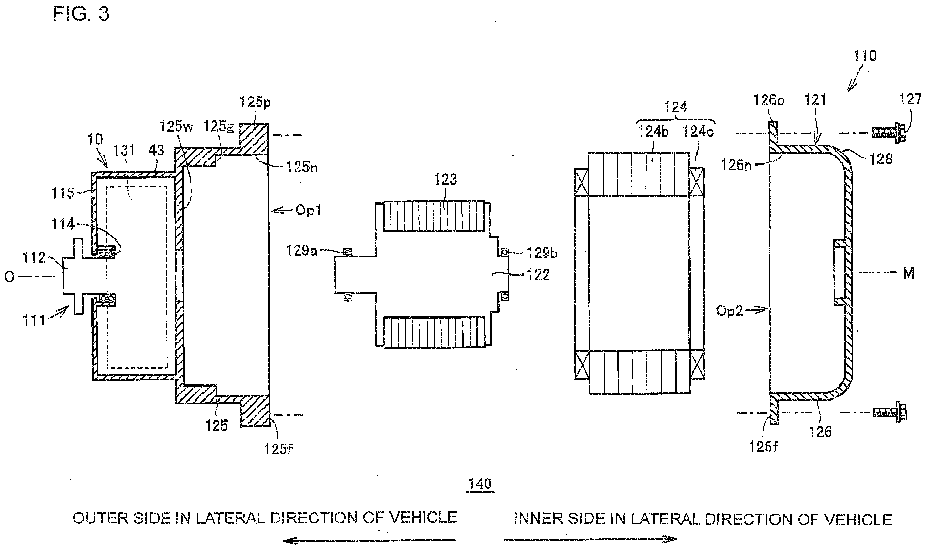

An embodiment of the present invention will be described in detail below with reference to the accompanying drawings. FIG. 1 is a schematic longitudinal section showing an in-wheel motor drive device of the present invention at the time a vehicle is moving straight without being steered. FIG. 2 is a schematic longitudinal section showing the in-wheel motor drive device of the present invention at the time the vehicle is turning at a maximum steering angle. FIG. 3 is a schematic longitudinal section showing the in-wheel motor drive device of the present invention which is being assembled. FIGS. 1 to 3 show the in-wheel motor drive device as viewed in the vertical direction. An in-wheel motor drive device 110 includes a wheel hub bearing unit 111, a motor unit 121, and a reduction gear unit 131 and is mounted in a wheel well 140 of an electrically powered vehicle.

The electrically powered vehicle includes, e.g., wheel wells and wheels in the right front, left front, right rear, and left rear parts of a vehicle body. A pair of right and left front wheels and/or a pair of right and left rear wheels are steered wheels. These wheel wells may have the same dimensions as wheel wells of vehicle bodies equipped with an engine.

An axis O of the wheel hub bearing unit 111 corresponds to an axle extending in the lateral direction of the electrically powered vehicle. The wheel hub bearing unit 111 is disposed on one side in the direction of the axis O of the in-wheel motor drive device 110. The motor unit 121 is disposed on the other side in the direction of the axis O of the in-wheel motor drive device 110. The reduction gear unit 131 is disposed between the wheel hub bearing unit 111 and the motor unit 121. The one side in the direction of the axis O is the outer side in the lateral direction of the vehicle (outboard side), and the other side in the direction of the axis O is the inner side in the lateral direction of the vehicle (inboard side). In the following description, the one side in the direction of the axis O and the other side in the direction of the axis O are simply referred to as the one side in the axial direction and the other side in the axial direction.

The wheel hub bearing unit 111 includes a wheel hub 112 located on the inner side in the radial direction, a rolling bearing 114, and a fixing member 115 located on the outer side in the radial direction. The wheel hub 112 extends along the axis O and is passed through a through hole formed in the fixing member 115. The rolling bearing 114 is placed in annular clearance between the wheel hub 112 and the fixing member 115. An end of the wheel hub 112 which is located on the one side in the direction of the axis O protrudes to the outside of the in-wheel motor drive device 110 and is coupled to a road wheel W of a steered wheel. The fixing member 115 is connected to an end of a body casing 43 which is located on the one side in the direction of the axis O. The body casing 43 serves as an outer shell of the reduction gear unit 131. The fixing member 115 serves as an end face of the reduction gear unit 131 which is located on the one side in the direction of the axis O.

The axis O extends parallel to the lateral direction of the electrically powered vehicle when the vehicle is moving straight. At this time, the steered wheel (road wheel W) and the in-wheel motor drive device 110 are not steered, as shown in FIG 1. On the other hand, the steered wheel (road wheel W) and the in-wheel motor drive device 110 are steered about a steering axis K when the electrically powered vehicle is turning, as shown in FIG. 2. At this time, the axis O extends obliquely with respect to the lateral direction of the vehicle.

The motor unit 121 has a rotor 123, a stator 124, a first casing 125, and a second casing 126. The rotor 123 extends along a motor axis M (also simply referred to as the axis M) and a motor rotary shaft 122 is placed in the center of the rotor 123. The motor rotary shaft 122 protrudes in the direction of the axis M beyond both end faces of the rotor 123. The motor axis M may be aligned with the axis O corresponding to the axle. In this case, the motor unit 121 is disposed coaxially with the wheel hub bearing unit 111. Alternatively, as in another embodiment described below, the motor axis M may extend parallel to the axis O at an interval therebetween. In this case, the motor unit 121 is offset from the wheel hub bearing unit 111 in a direction perpendicular to the axis O.

An end of the motor rotary shaft 122 which is located on one side in the direction of the axis M is rotatably supported by a partition wall 125w of the first casing 125 via a bearing 129a. An end of the motor rotary shaft 122 which is located on the other side in the direction of the axis M is rotatably supported by the second casing 126 via a bearing 129b. That is, the rotor 123 is rotatably supported at its both ends by the first casing 125 and the second casing 126. Alternatively, in a modification not shown, the rotor 123 may be rotatably supported at its one end by only the first casing 125 or may be rotatably supported at its one end by only the second casing 126 while its other end is not supported by any members.

The stator 124 is disposed radially outside the rotor 123 and faces an outer peripheral surface of the rotor 123 with clearance therebetween which opens in the radial direction. The stator 124 includes a stator core 124b and a stator coil 124c. The stator core 124b has protrusions and recesses which are repeatedly formed in the circumferential direction, and the stator coil 124c is wound around each protrusion. An end of the stator core 124b contacts a stepped portion 125g formed inside the first casing 125. The stepped portion 125g faces toward the other side in the direction of the axis M, and positions the stator 124 in the direction of the axis M by contacting the stator core 124b.

The first casing 125 and the second casing 126 are two members into which an outer shell of the motor unit 121 is divided and which are located on the one side and the other side in the axial direction. The first casing 125 and the second casing 126 accommodate the stator 124 and the rotor 123. The first casing 125 is disposed on the one side in the direction of the axis M, and the second casing 126 is disposed on the other side in the direction of the axis M.

The first casing 125 has two cylindrical shapes, each cylindrical shape has a constant inside diameter along its length in the direction of the axis M. An end of the first casing 125 which is located on the one side in the direction of the axis M is connected to the body casing 43 of the reduction gear unit 131. An end of the first casing 125 which is located on the other side in the direction of the axis M has an opening Op1 as shown in FIG. 3. The opening Op1 is covered by the second casing 126. The end of the first casing 125 which is located on the other side in the direction of the axis M and an end of the second casing 126 which is located on the one side in the direction of the axis M are abutting surfaces 125f, 126f abutting on each other. The abutting surfaces 125f, 126f are strip-like flat surfaces extending along the entire outer peripheries of the first and second casings 125, 126. Alternatively, in a modification, not shown, the abutting surfaces 125f, 126f may be formed so as to be fitted together like spigot and socket joint. The abutting surfaces 125f, 126f are flat surfaces perpendicular to the axis M. The abutting surface 125f of the first casing 125 defines the opening Op1 at the end of the first casing 125 which is located on the other side in the direction of the axis M. As shown in FIG. 3, the abutting surface 126f of the second casing 126 defines an opening Op2 at the end of the second casing 125 which is located on the one side in the direction of the axis M.

The body casing 43, the first casing 125, and the second casing 126 are made of the same material. Unlike mere covers made of a resin, these casings have sufficient rigidity. The body casing 43, the first casing 125, and the second casing 126 are therefore made of a metal. In order to achieve reduction in weight of the in-wheel motor drive device 110, the body casing 43, the first casing 125, and the second casing 126 are made of a light metal mainly comprised of aluminum. The radial wall thickness of a cylindrical part of the first casing 125 is the same as that of a cylindrical part of the second casing 126. The circular abutting surfaces 125f, 126f may have the same radial dimension or different radial dimensions.

The first casing 125 has, at its end located on the other side in the direction of the axis M, a plurality of protruding portions 125p protruding radially outward. The second casing 126 has, at its end located on the one side in the direction of the axis M, a plurality of protruding portions 126p protruding radially outward. Each protruding portion 125p has an internally threaded hole extending in the direction of the axis M, and each protruding portion 126p has a through hole extending in the direction of the axis M.

The plurality of protruding portions 125p are formed at intervals in the circumferential direction of the first casing 125 so as to adjoin the abutting surface 125f. The protruding portions 126p are formed similarly and contact the protruding portions 125p. A bolt 127 is passed through the through hole of each protruding portion 126p from the other side in the direction of the axis M, and an externally threaded part of the bolt 127 is screwed into the internally threaded hole of the protruding portion 126p. The first casing 125 and the second casing 126 are thus connected and fixed to each other.

The stator 124 extends in the direction of the axis M. One end of the stator 124 is placed in the first casing 125, and the other end of the stator 124 protrudes beyond the abutting surface 125f of the first casing 125. With the opening Op1 of the first casing 125 being open and the stator 124 being inserted and fixed in the first casing 125, the other end of the stator 124 protrudes through the opening Op1 of the first casing 125. The positions of the abutting surfaces 125f, 126f in the direction of the axis M correspond to a middle part of the stator 124 in the direction of the axis M as shown in FIG. 1.

The end of the second casing 126 which is located on the one side in the direction of the axis M has a cylindrical shape, and the second casing 126 has a smaller diameter in its end located on the other side in the direction of the axis M than in its end located on the one side in the direction of the axis M. The second casing 126 therefore has a smaller outside diameter in its end located on the other side in the direction of the axis M than in its end located on the one side in the direction of the axis M. The second casing 126 accommodates the other end of the rotor 123 and the other end of the stator 124. Specifically, the second casing 126 accommodates an end of the stator core 124b which is located on the other side in the direction of the axis M and a coil end in an end of the stator coil 124c which is located on the other side in the direction of the axis M.

The outer periphery of the end of the second casing 126 which is located on the other side in the direction of the axis M has a bowl shape and does not have a cylindrical surface. A radial outer edge 128 of the end of the second casing 126 which is located on the other side in the direction of the axis M is therefore not angular but is rounded as shown in FIG. 1. Alternatively, in a modification not shown, the radial outer edge 128 may be chamfered like a conical surface.

The first casing 125 is a cylindrical wall and accommodates the end of the stator core 124b which is located on the one side in the direction of the axis M and a coil end in an end of the stator coil 124c which is located on the one side in the direction of the axis M. An inner peripheral wall surface 125n of the first casing 125 is fitted on an outer peripheral surface of the stator core 124b. The stator 124 is thus positioned coaxially with the axis M. An end of the inner peripheral wall surface 125n which is located on the one side in the direction of the axis M is connected to the stepped portion 125g, and an end of the inner peripheral wall surface 125n which is located on the other side in the direction of the axis M is connected to the abutting surface 125f.

The partition wall 125w is formed on the one side in the direction of the axis M with respect to the stepped portion 125g. The partition wall 125w is, e.g., a flat circular plate and defines the internal space of the motor unit 121 and the internal space of the reduction gear unit 131. The partition wall 125w has a hole through which the motor rotary shaft 122 extends. One end of the motor rotary shaft 122 extends to the inside of the reduction gear unit 131, so that the motor rotary shaft 122 applies motor rotation to the reduction gear unit 131. The bearing 129a is interposed between the partition wall 125w of the first casing 125 and the motor rotary shaft 122.

An inner peripheral wall surface 126n of the second casing 126 which is formed on the one side in the direction of the axis M has a constant inside diameter along its length in the direction of the axis M. The inner peripheral wall surface 126n is fitted on the outer peripheral surface of the stator core 124b. According to the embodiment shown in FIG. 1, a region of the stator core 124b which is located on the one side in the direction of the axis M is fitted in the first casing 125, and a region of the stator core 124b which is located on the other side in the direction of the axis M is fitted in the second casing 126, so that the first casing 125 and the first casing 126 support the stator 124.

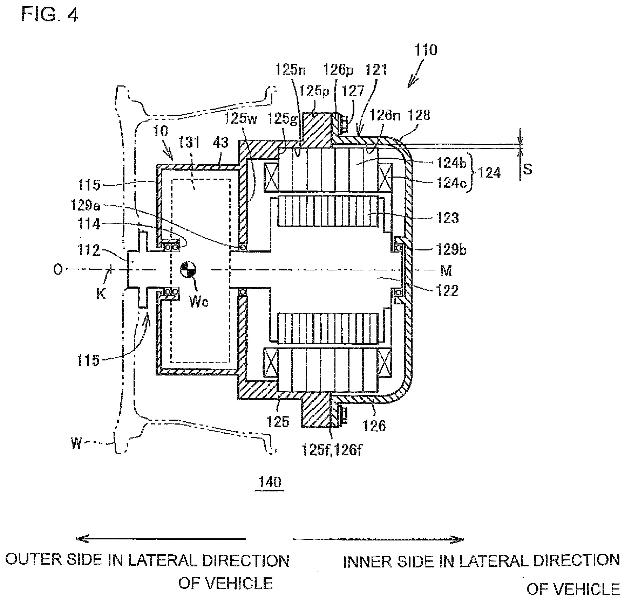

As shown in a modification of FIG. 4, clearance S may be provided between the inner peripheral wall surface 126n and the outer peripheral surface of the stator core 124b so that only the first casing 125 supports the stator 124. In this case, the region of the stator core 124b which is located on the one side in the direction of the axis M is fitted in the first casing 125.

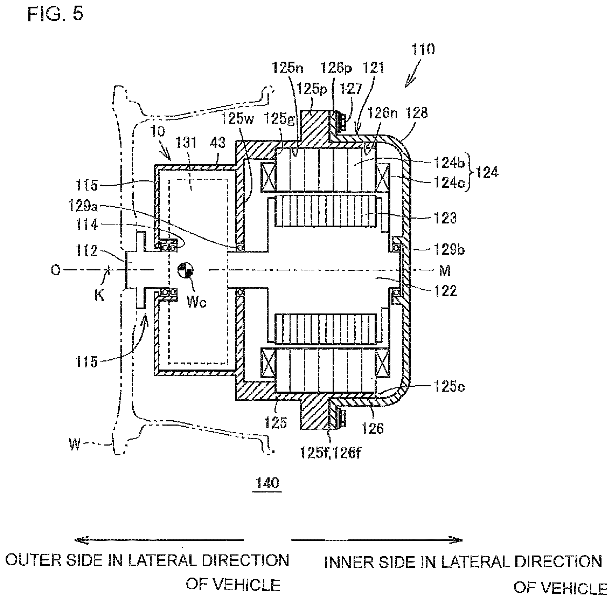

Alternatively, in another modification shown in FIG. 5, a cylindrical wall 125c may be extended from the abutting surface 125f of the first casing 125 so that an outer peripheral wall surface of the stator core 124b is fitted in an inner peripheral wall surface of the cylindrical wall 125c. In this case, the stator core 124b is fitted, from its end located on the one side in the direction of the axis M to its end located on the other side in the direction of the axis M, in the first casing 125. An outer peripheral surface of the cylindrical wall 125c is fitted in the inner peripheral wall surface 126n of the second casing 126. That is, in this modification, the end of the first casing 125 which is located on the other side in the direction of the axis M and the end of the second casing 126 which is located on the one side in the direction of the axis M are fitted together like spigot and socket joint. The second casing 126 is thus positioned coaxially with the axis M.

According to the embodiment shown in FIG. 1, the motor unit 121 has: the cylindrical first casing 125 serving as a part of an outer shell of the motor unit 121 which is located on the one side in the direction of the axis M; the second casing 126 serving as a part of the outer shell of the motor unit 121 which is located on the other side in the direction of the axis M and having a smaller outside diameter at the radial outer edge 128 of its end located on the other side in the direction of the axis M than at its end located on the one side in the direction of the axis M; the abutting surfaces 125f, 126f formed on the end of the first casing 125 which is located on the other side in the direction of the axis M and the end of the second casing 126 which is located on the one side in the direction of the axis M and abutting on each other; and the stator 124 extending in the direction of the axis M and having its one end placed in the first casing 125 and the other end placed in the second casing 126. A maximum steering angle of α1 can therefore be obtained as shown in FIG. 2 in the case where there is clearance Cl between the second casing 126 and a wall material 141 of the wheel well at a steering angle of 0 as shown in FIG. 1.

The effects of the present embodiment will be described in comparison with the conventional example shown in FIG 9. The in-wheel motor 200 of the conventional example shown in FIG. 9 has: the cylindrical housing 205 serving as a part of an outer shell of the motor unit 202 which is located on the one side in the direction of the axis O; the cover 206 that is a circular plate serving as a part of the outer shell of the motor unit 202 which is located on the other side in the direction of the axis O, having a thickness in the direction of the axis O, and having a constant outside diameter; the abutting surfaces 205f, 206f formed on an end of the housing 205 which is located on the other side in the direction of the axis O and an end face of the cover 206 which is located on the one side in the direction of the axis O and abutting on each other; and the stator 204 extending in the direction of the axis O and entirely placed in the housing 205, and having the other end facing the end face of the cover 206 which is located on the one side in the direction of the axis O with predetermined clearance therebetween. The embodiment shown in FIG. 1 and the conventional example shown in FIG. 9 have the same axial dimension and the same outside diameter dimension. According to such a conventional example, the outer edge 208 of the cover 206 interferes with the wall material 211 at a steering angle of α1 as shown in FIG. 10 in the case where there is clearance Cl between the cover 206 and the wall member 211 of the wheel well at a steering angle of 0 as shown in FIG. 9. That is, a maximum steering angle in the conventional example is smaller than the maximum steering angle of α1 in the embodiment shown in FIG. 2.

According to the present embodiment, as shown in FIG. 1, the stator 124 includes the stator core 124b and the stator coil 124c wound around the stator core 124b, and the end of the stator core 124b which is located on the one side in the direction of the axis M is placed in the first casing 125, and the end of the stator core 124b which is located on the other side in the direction of the axis M is placed in the second casing 126. According to the present embodiment, an outer peripheral surface of the stator 124 is fitted in the inner peripheral wall surface 125n of the first casing 125. The stator 124 can thus be positioned coaxially with the axis M.

According to the present embodiment, the stepped portion 125g facing toward the end of the first casing 125 which is located on the other side in the direction of the axis M and contacting the stator 124 is formed inside the first casing 125. The stator 124 can thus be positioned at a predetermined position in the direction of the axis M.

According to the present embodiment, the first casing 125 has the circular flat partition wall 125w at its end located on the one side in the axial direction, and the partition wall 125w rotatably supports the rotor 123 via the bearing 129a.

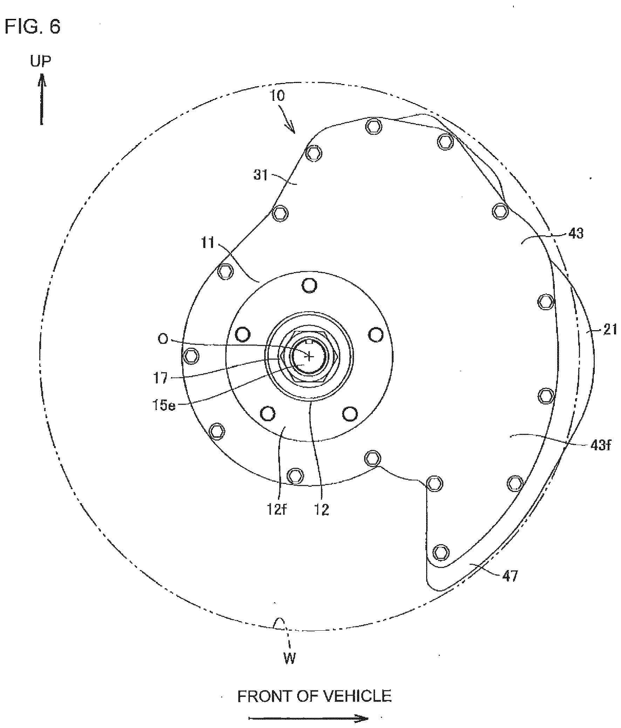

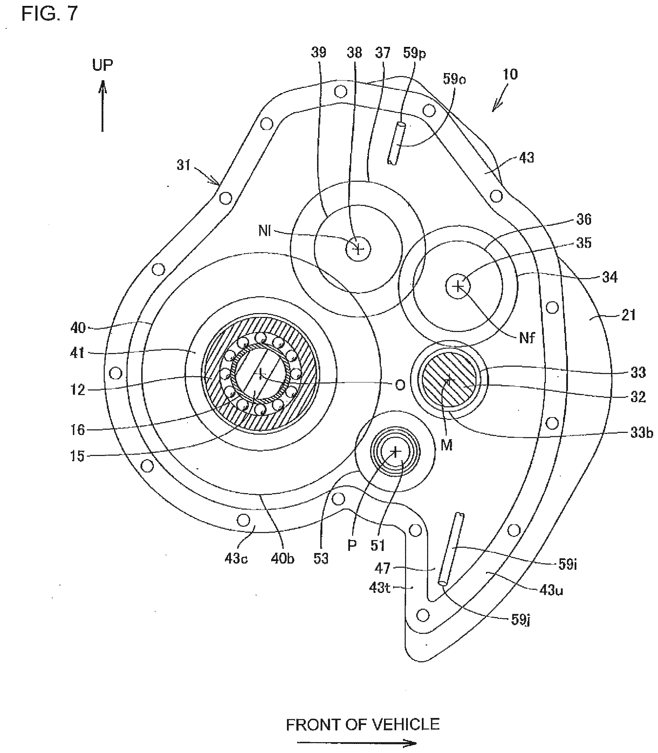

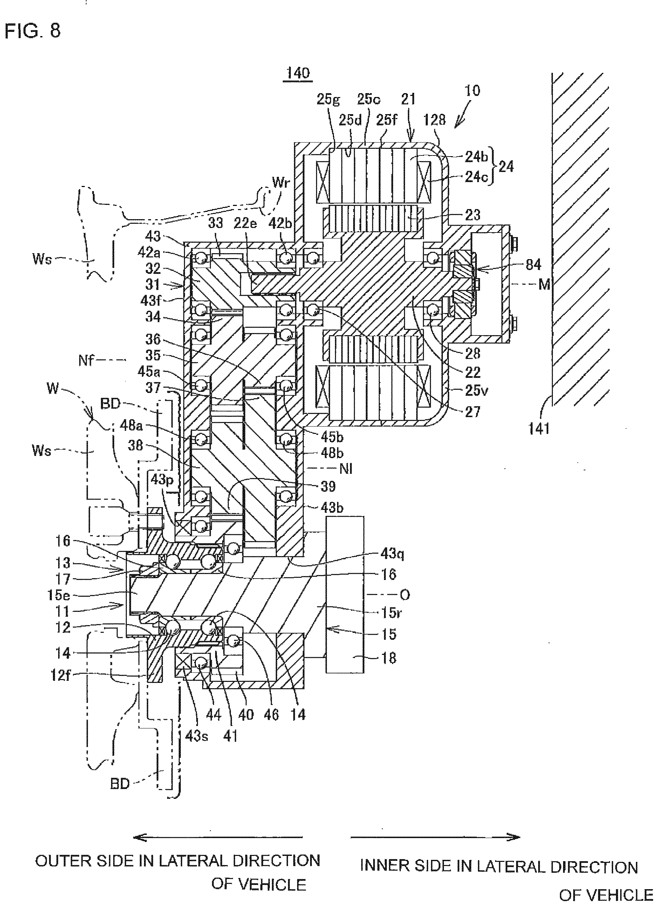

Next, another embodiment of the present invention will be described. FIG. 6 is a schematic view of an in-wheel motor drive device according to another embodiment of the present invention. FIG. 7 is a transverse section schematically showing the in-wheel motor drive device of the another embodiment. FIGS. 6 and 7 show the in-wheel motor drive device as viewed from the outer side in the lateral direction of a vehicle. In FIG. 7, each gear in a reduction gear unit is shown by an addendum circle and individual teeth are not shown. FIG. 8 is a developed section schematically showing the in-wheel motor drive device of the another embodiment. The cutting plane shown in FIG. 8 is a developed plane connecting a plane including an axis M and an axis Nf shown in FIG. 7, a plane including the axis Nf and an axis Nl, and a plane including the axis Nl and an axis O in this order.

An in-wheel motor drive device 10 includes a wheel hub bearing unit 11, a motor unit 21, and a reduction gear unit 31 that reduces the speed of rotation of the motor unit 21 to transmit the resultant rotation to the wheel hub bearing unit 11. The in-wheel motor drive device 10 is symmetrically disposed on the right and left sides in the lateral direction of an electrically powered vehicle (not shown). As shown in FIG. 8, the wheel hub bearing unit 11 is disposed on the outer side in the lateral direction of the vehicle, and the motor unit 21 is disposed on the inner side in the lateral direction of the vehicle.

The in-wheel motor drive device 10 is disposed in an internal space region of a road wheel W shown in phantom in FIG. 6, is connected to the center of the road wheel W shown in phantom in FIG. 8, and drives the road wheel W of a wheel.

Each in-wheel motor drive device 10 is connected to a vehicle body of the electrically powered vehicle via a suspension device, not shown. The in-wheel motor drive devices 10 allow the electrically powered vehicle to move at 0 to 180 km/h on public roads.

The motor unit 21 and the reduction gear unit 31 are not disposed coaxially with the axis O of the wheel hub bearing unit 11 as shown in FIGS. 6 and 7, but are offset from the axis O of the wheel hub bearing unit 11 as shown in FIG. 8. That is, as described in detail later, the in-wheel motor drive device 10 includes a portion facing toward the front of the vehicle, a portion facing toward the rear of the vehicle, a portion disposed in an upper part, and a portion disposed in a lower part.

The wheel hub bearing unit 11 has an outer ring 12 that serves as a wheel hub ring coupled to the road wheel W as shown in FIG. 8, an inner fixing member 13 passed through a central hole of the outer ring 12, and a plurality of rolling elements 14 arranged in annular clearance between the outer ring 12 and the inner fixing member 13, and the wheel hub bearing unit 11 forms an axle. The inner fixing member 13 includes a non-rotary fixed shaft 15, a pair of inner races 16, a retaining nut 17, and a carrier 18. The fixed shaft 15 has a larger diameter in its root part 15r than in its tip end 15e. The inner races 16 are fitted on the fixed shaft 15 between the root part 15r and the tip end 15e. The retaining nut 17 is screwed on the tip end 15e of the fixed shaft 15 to fix the inner races 16 between the retaining nut 17 and the root part 15r.

The fixed shaft 15 extends along the axis O and extends through a body casing 43 that serves as an outer shell of the reduction gear unit 31. The tip end 15e of the fixed shaft 15 extends through an opening 43p formed in a front portion 43f of the body casing 43 and protrudes outward in the lateral direction of the vehicle beyond the front portion 43f. The root part 15r of the fixed shaft 15 extends from a position located on the inner side in the lateral direction of the vehicle with respect to a back portion 43b of the body casing 43 and extends through an opening 43q formed in the back portion 43b. The front portion 43f and the back portion 43b are casing wall portions that face each other at an interval in the direction of the axis O. The carrier 18 is attached and fixed to the root part 15r. The carrier 18 is located outside the body casing 43 and connected to the suspension device and a tie rod which are not shown.

The rolling elements 14 are arranged in two rows separated in the direction of the axis O. An outer peripheral surface of the inner race 16 located on one side in the direction of the axis O forms an inner raceway surface for the first row of the rolling elements 14 and faces a part of an inner peripheral surface of the outer ring 12 which is located on the one side in the direction of the axis O. An outer peripheral surface of the inner race 16 located on the other side in the direction of the axis O forms an inner raceway surface for the second row of the rolling elements 14 and faces a part of the inner peripheral surface of the outer ring 12 which is located on the other side in the direction of the axis O. In the following description, the outer side in the lateral direction of the vehicle (outboard side) is sometimes referred to as the one side in the direction of the axis O, and the inner side in the lateral direction of the vehicle (inboard side) is sometimes referred to as the other side in the direction of the axis O. The lateral direction in the plane of paper of FIG. 8 corresponds to the lateral direction of the vehicle. The inner peripheral surface of the outer ring 12 forms an outer raceway surface for the rolling elements 14.

The outer ring 12 has a flange portion 12f in its end located on the one side in the direction of the axis O. The flange portion 12f forms a coupling seat that is coaxially coupled to a brake disc BD and a spoke portion Ws of the road wheel W. The outer ring 12 is coupled at the flange portion 12f to the brake disc BD and the road wheel W and rotates with the road wheel W. In a modification, not shown, the flange portion 12f may be protruding portions formed at intervals in the circumferential direction and protruding radially outward.

As shown in FIG. 8, the motor unit 21 includes a motor rotary shaft 22, a rotor 23, a stator 24, and a motor casing 25c, which are arranged in this order from the axis M of the motor unit 21 toward the outside in the radial direction. The motor casing 25c has a tubular shape and a motor casing cover 25v of the motor unit 21 covers an opening of the motor casing 25c which is located on the other side in the direction of the axis M. Since the motor unit 21 has a radially inner rotor and a radially outer stator which face each other with a radial gap therebetween, the motor unit 21 is a radial gap motor. However, the motor unit 21 may be of other types. For example, the motor unit 21 may be an axial gap motor, although not shown in the figures. The stator 24 is connected to a power line (not shown) extending from the vehicle body side. The motor unit 21 performs power running with electric power received from the vehicle body side through the power line or performs a regenerative operation in which the motor unit 21 converts rotation of the outer ring 12 to electric power and supplies the electric power to the vehicle body side through the power line.

The cylindrical stator 24 includes a stator core 24b and a stator coil 24c. The stator coil 24c is provided in at least both ends of the stator core 24b in the direction of the axis M. The motor unit 21 of the present embodiment is a three-phase AC rotating electrical machine.

The tubular motor casing 25c extends about the axis M and has an inner peripheral surface 25d having a constant radius from its end located on one side in the direction of the axis M to its end located on the other side in the direction of the axis M, a stepped portion 25g formed at the end of the inner peripheral surface 25d which is located on the one side in the direction of the axis M, and an abutting surface 25f serving as an end face located on the other side in the direction of the axis M. The abutting surface 25f is an annular flat surface. An end face of the motor casing cover 25v which is located on the one side in the direction of the axis M also forms an abutting surface 25f having the same shape. The motor casing 25c located on the one side in the direction of the axis M and the motor casing cover 25v located on the other side in the direction of the axis M abut on each other at the abutting surfaces 25f, 25f and are coupled together as shown in FIG. 8. A radial outer edge 128 of an end of the motor casing cover 25v which is located on the other side in the direction of the axis M is not formed in a cylindrical shape but is formed so as to be narrowed toward the other side in the direction of the axis M. For example, the radial outer edge 128 is chamfered. Alternatively, the radial outer edge 128 is rounded into a bowl shape.

When assembling the motor unit 21, the stator 24 is inserted from the other side in the axial direction into the opening of the motor casing 25c which is located on the other side in the direction of the axis M, and the stator core 24b contacts the stepped portion 25g, whereby the stator 24 is positioned in the direction of the axis M.

An outer peripheral surface of the stator core 24b is fitted in the inner peripheral surface 25d of the motor casing 25c. The stator 24 is positioned coaxially with the axis M. A region of the stator core 24b which is located on the one side in the direction of the axis M is fitted in the inner peripheral surface of the motor casing 25c, and a region of the stator core 24b which is located on the other side in the direction of the axis M is fitted in an inner peripheral surface of the motor casing cover 25v. The motor casing 25c corresponds to the first casing 125 shown in FIGS. 1 to 3. The motor casing cover 25v corresponds to the second casing 126. The stator core 24b corresponds to the stator core 124b, and the stator coil 24c corresponds to the stator coil 124c.

The axis M, which is the center of rotation of the motor rotary shaft 22 and the rotor 23, extends parallel to the axis O of the wheel hub bearing unit 11. That is, the motor unit 21 is offset from the axis O of the wheel hub bearing unit 11. As shown in FIG. 8, a large part of the motor unit 21 except a tip end 22e of the motor rotary shaft 22 does not overlap the inner fixing member 13 in the axial direction. The cylindrical motor casing 25c is coupled at its end located on the one side in the direction of the axis M to the back portion 43b of the body casing 43 and is covered by a casing wall portion that extends continuously and flush with the back portion 43b. Such a casing wall portion has in its center a through hole extending along the axis M. The tip end 22e of the motor rotary shaft 22 is passed through the through hole. The cylindrical motor casing 25c is sealed at its end located on the other side in the direction of the axis X by the bowl-shaped motor casing cover 25v. Both ends of the motor rotary shaft 22 are rotatably supported by the motor casing 25c and the motor casing cover 25v via rolling bearings 27, 28. The motor unit 21 drives the outer ring 12 (i.e., the wheel) and a pump shaft 51 (FIG. 7). The rolling bearings 27, 28 correspond to the bearings 129a, 129b shown in FIGS. 1 to 3. The back portion 43b corresponds to the partition wall 125w.

The reduction gear unit 31 has an input shaft 32, an input gear 33, an intermediate gear 34, an intermediate shaft 35, an intermediate gear 36, an intermediate gear 37, an intermediate shaft 38, an intermediate gear 39, an output gear 40, an output shaft 41, and the body casing 43. The input shaft 32 is a tubular member having a larger diameter than the tip end 22e of the motor rotary shaft 22 and extends along the axis M of the motor unit 21. The tip end 22e is placed in a central hole formed in an end of the input shaft 32 which is located on the other side in the direction of the axis M, so that the input shaft 32 is coaxially coupled to the motor rotary shaft 22. Both ends of the input shaft 32 are supported by the body casing 43 via rolling bearings 42a, 42b. The input gear 33 is an external gear having a smaller diameter than the motor unit 21 and is coaxially coupled to the input shaft 32. Specifically, the input gear 33 is integrally formed on the outer periphery of a middle part of the input shaft 32 in the direction of the axis M.

The output shaft 41 is a tubular member having a larger diameter than a cylindrical portion of the outer ring 12 and extends along the axis O of the wheel hub bearing unit 11. An end of the outer ring 12 which is located on the other side in the direction of the axis O is placed in a central hole formed in an end of the output shaft 41 which is located on the one side in the direction of the axis O, so that the output shaft 41 is coaxially coupled to the outer ring 12. The output gear 40 is an external gear and is coaxially coupled to the output shaft 41. Specifically, the output gear 40 is integrally formed on the outer periphery of an end of the output shaft 41 which is located on the other side in the direction of the axis O. Rolling bearings 44, 46 are disposed on both ends of the output shaft 41 in the direction of the axis O.

The rolling bearing 44 is disposed on the one side in the direction of the axis O with respect to the output gear 40 and is located between an outer peripheral surface of the output shaft 41 and an inner peripheral surface of the opening 43p. The rolling bearing 44 is disposed radially outside the outer ring 12 so as to overlap the outer ring 12 in the direction of the axis O.

The rolling bearing 46 is disposed on the other side in the direction of the axis O with respect to the outer ring 12 and is located between an inner peripheral surface of the output shaft 41 and an outer peripheral surface of the fixed shaft 15. The rolling bearing 46 is disposed radially inside the output gear 40 so as to overlap the output gear 40 in the direction of the axis O.

Regarding the position in the direction of the axis O, the rolling bearing 44 is disposed so as to overlap a region of the outer ring 12 which is located on the other side in the direction of the axis O, whereas the rolling bearing 46 is disposed on the other side in the direction of the axis O with respect to the outer ring 12 and does not overlap the outer ring 12. The rolling bearing 46 is disposed radially inside the teeth of the output gear 40 and the rolling bearing 46 overlaps the output gear 40 in the direction of the axis O.

The two intermediate shafts 35, 38 extend parallel to the input shaft 32 and the output shaft 41. That is, the reduction gear unit 31 is a four-parallel-shaft gear reducer. The axis O of the output shaft 41, the axis Nf of the intermediate shaft 35, the axis Nl of the intermediate shaft 38, and the axis M of the input shaft 32 extend parallel to each other, namely extend in the lateral direction of the vehicle.

The position of each axis in the longitudinal direction of the vehicle will be described. As shown in FIG. 7, the axis M of the input shaft 32 is located closer to the front of the vehicle than the axis O of the output shaft 41. The axis Nf of the intermediate shaft 35 is located closer to the front of the vehicle than the axis M of the input shaft 32. The axis Nl of the intermediate shaft 38 is located closer to the front of the vehicle than the axis O of the output shaft 41 and closer to the rear of the vehicle than the axis M of the input shaft 32. In a modification, not shown, the axis M of the input shaft 32, the axis Nf of the intermediate shaft 35, the axis Nl of the intermediate shaft 38, and the axis O of the output shaft 41 may be arranged in this order in the longitudinal direction of the vehicle. This order is also the order in which a driving force is transmitted.

The vertical position of each axis will be described. The input shaft 32 is disposed so as to overlap the output shaft 41 in the vertical direction. The axis Nf of the intermediate shaft 35 is located above the axis M of the input shaft 32. The axis Nl of the intermediate shaft 38 is located above the axis Nf of the intermediate shaft 35. The plurality of intermediate shafts 35, 38 need only be disposed above the input shaft 32 and the output shaft 41, and in a modification, not shown, the intermediate shaft 35 may be disposed above the intermediate shaft 38. Alternatively, in a modification, not shown, the output shaft 41 may be disposed above the input shaft 32.

The intermediate gear 34 and the intermediate gear 36 are external gears, and as shown in FIG. 8, are coaxially coupled to a middle region of the intermediate shaft 35 in the direction of the axis Nf. Both ends of the intermediate shaft 35 are supported by the body casing 43 via rolling bearings 45a, 45b. The intermediate gear 37 and the intermediate gear 39 are external gears and are coaxially coupled to a middle region of the intermediate shaft 38 in the direction of the axis Nl. Both ends of the intermediate shaft 38 are supported by the body casing 43 via rolling bearings 48a, 48b.

The body casing 43 serves as the outer shell of the reduction gear unit 31 and the wheel hub bearing unit 11, has a tubular shape, and surrounds the axes O, Nf, Nl, M as shown in FIG. 7. As shown in FIG. 8, the body casing 43 is accommodated in the internal space region of the road wheel W. The internal space region of the road wheel W is defined by the inner peripheral surface of a rim portion Wr and the spoke portion Ws coupled to an end of the rim portion Wr which is located on the one side in the direction of the axis O. The wheel hub bearing unit 11, the reduction gear unit 31, and a region of the motor unit 21 which is located on the one side in the axial direction are accommodated in the internal space region of the road wheel W. A region of the motor unit 21 which is located on the other side in the axial direction protrudes beyond the road wheel W toward the other side in the axial direction. The road wheel W thus accommodates a large part of the in-wheel motor drive device 10.

Referring to FIG. 7, the body casing 43 has a portion 43c located directly below the axis O and a portion located away from the axis O of the output gear 40 in the longitudinal direction of the vehicle, specifically located directly below the axis M of the input gear 33, and protruding downward. This protruding portion forms an oil tank 47 and is located below the portion 43c located directly below the axis O.

The body casing 43 has a tubular shape and, as shown in FIG. 8, accommodates the input shaft 32, the input gear 33, the intermediate gear 34, the intermediate shaft 35, the intermediate gear 36, the intermediate gear 37, the intermediate shaft 38, the intermediate gear 39, the output gear 40, the output shaft 41, and a middle part of the wheel hub bearing unit 11 in the direction of the axis O. Lubricating oil is sealed in the body casing 43, and the reduction gear unit 31 is lubricated. The input gear 33, the intermediate gear 34, the intermediate gear 36, the intermediate gear 37, the intermediate gear 39, and the output gear 40 are helical gears.

The body casing 43 has a tubular portion including the portion 43c located directly below the axis O and the oil tank 47 and surrounding the group of gears 33, 34, 36, 37, 39, 40 as shown in FIG. 7, the substantially flat front portion 43f covering the one side in the axial direction of a tubular portion of the reduction gear unit 31 and the substantially flat back portion 43b covering the other side in the axial direction of the tubular portion of the reduction gear unit 31 as shown in FIG. 8. The back portion 43b is coupled to the motor casing 25c. The back portion 43b is also coupled to the fixed shaft 15.

The front portion 43f has the opening 43p through which the outer ring 12 extends. A sealing material 43s is disposed in annular clearance between the opening 43p and the output shaft 41. The sealing material 43s is disposed on the one side in the direction of the axis O with respect to the rolling bearing 44 and seals the annular clearance. The outer ring 12, which is a rotary element, is accommodated, except for its end located on the one side in the direction of the axis O, in the body casing 43.

The input gear 33 having a smaller diameter and the intermediate gear 34 having a larger diameter are disposed in a part of the reduction gear unit 31 which is located on the one side in the axial direction (on the flange portion 12f side) and mesh with each other. The intermediate gear 36 having a smaller diameter and the intermediate gear 37 having a larger diameter are disposed in a part of the reduction gear unit 31 which is located on the other side in the axial direction (on the motor unit 21 side) and mesh with each other. The intermediate gear 39 having a smaller diameter and the output gear 40 having a larger diameter are disposed in the part of the reduction gear unit 31 which is located on the one side in the axial direction (on the flange portion 12f side) and mesh with each other. The input gear 33, the plurality of intermediate gears 34, 36, 37, 39, and the output gear 40 thus mesh with each other and form a drive transmission path from the input gear 33 through the plurality of intermediate gears 34, 36, 37, 39 to the output gear 40. As the smaller diameter drive gears and the larger diameter driven gears mesh with each other as described above, rotation of the input shaft 32 is reduced in speed by the intermediate shaft 35, rotation of the intermediate shaft 35 is reduced in speed by the intermediate shaft 38, and rotation of the intermediate shaft 38 is reduced in speed by the output shaft 41. The reduction gear unit 31 thus has a sufficient reduction ratio. Of the plurality of intermediate gears, the intermediate gear 34 is the first intermediate gear located on the input side of the drive transmission path. Of the plurality of intermediate gears, the intermediate gear 39 is the last intermediate gear located on the output side of the drive transmission path.

As shown in FIG. 7, the output shaft 41, the intermediate shaft 38, and the input shaft 32 are arranged in this order at intervals in the longitudinal direction of the vehicle. The intermediate shaft 35 and the intermediate shaft 38 are disposed above the input shaft 32 and the output shaft 41. According to the another embodiment, the intermediate shafts can be disposed above the outer ring 12 that serves as a wheel hub, so that space where the oil tank 47 is disposed can be provided below the outer ring 12 and space that accommodates a ball joint, not shown, of the suspension device can be provided directly below the outer ring 12. This allows a steering axis passing through the ball joint and extending in the vertical direction to cross the wheel hub bearing unit 11, whereby the road wheel W and the in-wheel motor drive device 10 can be suitably steered about the steering axis.

As shown in FIG. 7, the body casing 43 further accommodates the pump shaft 51. An axis P of the pump shaft 51 extends parallel to the axis O of the output shaft 41. The pump shaft 51 is separated from the output shaft 41 in the longitudinal direction of the vehicle as shown in FIG. 7, is rotatably supported at its both ends in the direction of the axis P via rolling bearings, not shown, and is coaxially coupled to a pump gear 53. The pump gear 53 is a helical gear and meshes with the output gear 40. The output gear 40 drives the pump shaft 51.

An oil pump, not shown, is disposed at the end of the pump shaft 51 in the direction of the axis P. The oil pump is connected to a suction oil passage 59i and a discharge oil passage 59o shown in FIG. 7. The suction oil passage 59i extends downward from the oil pump into the oil tank 47, and a suction port 59j at the lower end of the suction oil passage 59i is located near a bottom wall of the oil tank 47. The discharge oil passage 59o extends upward from the oil pump and a discharge port 59p at the upper end of the discharge oil passage 59o is located at a higher position than the intermediate gear 37.

As the pump shaft 51 is driven by the output gear 40, the oil pump, not shown, sucks lubricating oil in the oil tank 47 through the suction port 59j and discharges the sucked lubricating oil through the discharge port 59p. The discharge port 59p is located at a higher position than all the gears (the input gear 33, the intermediate gears 34, 36, 37, 39, and the output gear 40), and the oil pump supplies the lubricating oil to these gears from above through the discharge port 59p. The lubricating oil is also injected into the motor unit 21 through the discharge oil passage 59o. The motor unit 21 and the reduction gear unit 31 are thus lubricated and cooled.

Referring to FIG. 7, the pump shaft 51 of the present embodiment is disposed below the input shaft 32, and the oil tank 47 is disposed below the pump shaft 51. For example, the oil pump is a cycloidal pump disposed substantially coaxially with the pump shaft 51 and pumps up the lubricating oil stored in the oil tank 47 to directly above the oil tank 47. The pump shaft 51 and the oil tank 47 are disposed closer to the front of the vehicle than the output shaft 41. When the road wheel W is driven by the in-wheel motor drive device 10 to move the vehicle, the oil tank 47 is subjected to running wind from ahead of the vehicle and is thus cooled by air.

According to the in-wheel motor drive device 10 of the embodiment shown in FIGS. 6 to 8, the motor unit 21 has: the cylindrical motor casing 25c serving as a part of an outer shell of the motor unit 21 which is located on the one side in the direction of the axis M; the motor casing cover 25v serving as a part of the outer shell of the motor unit 21 which is located on the other side in the direction of the axis M and having a smaller outside diameter at the radial outer edge 128 of its end located on the other side in the direction of the axis M than at its end located on the one side in the direction of the axis M; the abutting surfaces 25f formed on an one end of the motor casing cover 25v the other end of the motor casing 25c and abutting on each other; and the stator 24 extending in the direction of the axis M and having its one end placed in the motor casing 25c and the other end placed in the motor casing cover 25v. A maximum steering angle can therefore be increased as compared to the case where the motor casing cover 25v is not chamfered like the radial outer edge 128.

According to the in-wheel motor drive device 10 of the embodiment shown in FIGS. 6 to 8, the outer ring 12 serving as a wheel hub is disposed so as to extend parallel to the axis M of the rotor 23, and the in-wheel motor drive device 10 further includes the reduction gear unit 31 as a parallel-shaft gear reducer mechanism that has the input gear 33 coupled to the rotor 23 and the output gear 40 coupled to the outer ring 12 and that reduces the speed of input rotation from the rotor 23 to output the resultant rotation to the output ring 12. According to such an embodiment, it is possible not to sacrifice the maximum steering angle in the in-wheel motor drive device in which the motor unit 21 is offset from the center of the wheel (axis O) in the longitudinal direction of the vehicle as shown in FIG. 7.

Although the embodiments of the present invention are described above with reference to the figures, the present invention is not limited to the illustrated embodiments. Various changes and modifications can be made to the illustrated embodiments without departing from the spirit and scope of the invention.

### Industrial Applicability

The in-wheel motor drive device for a steered wheel according to the present invention is advantageously used in electric vehicles and hybrid vehicles.

### Reference Signs List

110: In-Wheel Motor Drive Device, 111: Wheel Hub Bearing Unit, 112: Wheel Hub, 121: Motor Unit, 123: Rotor, 124: Stator, 124b: Stator Core, 124c: Stator Coil, 125f, 126f: Abutting Surface, 125g: Stepped Portion, 128: Radial Outer Edge, 129a, 129b: Bearing, 131: Reduction Gear Unit, 140: Wheel Well, 141: Wall Material

## Claims

1. An in-wheel motor drive device for a steered wheel, comprising:
a wheel hub bearing unit that rotatably supports a wheel hub coupled to the steered wheel; and a motor unit that drives the wheel hub, wherein
the motor unit has a tubular first casing serving as a part of an outer shell of the motor unit which is located on one side in an axial direction, a tubular second casing serving as a part of the outer shell of the motor unit which is located on the other side in the axial direction and having a smaller outside diameter at its end located on the other side in the axial direction than at its end located on the one side in the axial direction, abutting surfaces formed on an end of the first casing which is located on the other side in the axial direction and the end of the second casing which is located on the one side in the axial direction and abutting on each other, and a stator extending in the axial direction and having its one end placed in the first casing and the other end placed in the second casing.

2. The in-wheel motor drive device for a steered wheel according to claim 1, wherein
the second casing rotatably supports a rotor of the motor unit.

3. The in-wheel motor drive device for a steered wheel according to claim 1 or 2, wherein
the stator includes a stator core and a stator coil wound around the stator core, and
an end of the stator core which is located on the one side in the axial direction is placed in the first casing, and an end of the stator core which is located on the other side in the axial direction is placed in the second casing.

4. The in-wheel motor drive device for a steered wheel according to any one of claims 1 to 3, wherein
an outer peripheral surface of the stator is fitted in an inner peripheral surface of the first casing.

5. The in-wheel motor drive device for a steered wheel according to any one of claims 1 to 4, wherein
a stepped portion that faces toward the other side in the axial direction and contacts the stator is formed inside the first casing.

6. The in-wheel motor drive device for a steered wheel according to any one of claims 1 to 5, wherein
an end of the first casing which is located on the one side in the axial direction rotatably supports the rotor of the motor unit via a bearing.

7. The in-wheel motor drive device for a steered wheel according to any one of claims 1 to 6, wherein
the wheel hub is disposed so as to extend parallel to an axis of the motor unit, the in-wheel motor drive device further comprising:
a parallel-shaft gear reducer mechanism that has an input gear coupled to the rotor of the motor unit and an output gear coupled to the wheel hub and that reduces a speed of input rotation from the rotor to output the resultant rotation to the wheel hub.
